# EUROPÄISCHE PATENTANMELDUNG

(11) **EP 2 120 144 A2**
(43) Veröffentlichungstag der Anmeldung: **18.11.2009**
(21) Anmeldenummer: 09153968.4
(22) Anmeldetag: 27.02.2009
(51) Int. Cl.: G06F 9/50

(54) **Rechnerverbund und Verfahren zur Konfiguration eines Rechnerverbundes**

(30) Priorität: 16.05.2008 DE 102008023846
(71) Anmelder: Fujitsu Siemens Computers GmbH, 80807 München (DE)
(72) Erfinder: Hartung, Klaus, 33154, Salzkotten (DE)
(74) Vertreter: Epping - Hermann - Fischer

(57) **Zusammenfassung**

Das Verfahren zur Konfiguration eines Rechnerverbundes mit einer Mehrzahl von Rechnern weist die folgenden Schritte auf: Es wird mindestens eine Rechnergruppe (G) zur Bereitstellung jeweils eines Dienstes (D) vorgegeben, wobei jeder Rechnergruppe (G) anfangs jeweils einer der Rechner (R) zugewiesen wird, auf dem ein dem jeweiligen Dienst (D) und der entsprechenden Rechnergruppe (G) zugeordneter Agent (A) ausgeführt wird. Es wird eine Anforderungsanfrage (Rq) mindestens eines der Agenten (A) von einer zentralen Steuereinheit (Z) entgegengenommen, wobei die Anforderungsanfrage (Rq) die Bereitstellung mindestens eines weiteren Rechners (R) zu der Rechnergruppe (G), der der anfordernde Agent (A) zugewiesen ist, betrifft. Zu einer Mehrzahl von möglichen Konfigurationen (K) des Rechnerverbunds, die der Anforderungsanfrage (Rq) genügen, wird je eine Bewertungszahl (P) ermittelt. Aus der Menge der ermittelten Bewertungszahlen (P) wird eine ausgezeichnete Bewertungszahl (Pmin) bestimmt. Der Rechnerverbund wird anschließend in einer zur ausgezeichnete Bewertungszahl (Pmin) gehörigen Konfiguration (Kmin) konfiguriert.

## Beschreibung

Die Erfindung betrifft einen Rechnerverbund mit einer Mehrzahl von Rechnern zur Bereitstellung von Diensten über ein Netzwerk sowie ein Verfahren zur Konfiguration eines solchen Rechnerverbunds im Hinblick auf die Bereitstellung der Dienste.

In einem solchen Rechnerverbund sind die Rechner, häufig auch Server genannt, dazu eingerichtet, Dienste über ein Netzwerk bereitzustellen, die von Benutzern, auch Clients genannt, durch das Senden einer entsprechenden Anfrage an die Rechner genutzt werden können. Dabei ist eine Vielfalt verschiedener Dienste bekannt, zum Beispiel Datei-, Web- oder Datenbankdienste.

In großen, auch als Serverfarm bezeichneten Rechnerverbünden dieser Art werden häufig mehrere hunderte oder tausende von Rechnern betrieben. Um Konfigurations- und Verwaltungsaufgaben in einem derartigen Rechnerverbund mit vertretbarem Aufwand bewerkstelligen zu können, sind zunehmend automatisierte Konfigurations- und Verwaltungsverfahren erforderlich. Der Ansatz, Konfigurations- und Verwaltungsaufgaben zu automatisieren, ist auch als "autonomous computing" bekannt. Üblicherweise ist zu diesem Zweck eine zentrale Steuereinheit vorgesehen, die anhand vorgegebener Kriterien festlegt, wie viele und welche der Rechner des Rechnerverbundes zur Bereitstellung der verschiedenen Dienste eingesetzt werden sollen. Die zentrale Steuereinheit kann dabei dazu eingerichtet sein, eine entsprechende Konfiguration festzulegen oder gegebenenfalls auch umzusetzen.

Die Festlegung der einzunehmenden Konfiguration basiert häufig auf einem Vergleich zwischen der Nachfrage an den einzelnen Diensten, der Güte, auch Performance genannt, mit der die Nachfrage bedient werden kann, der Anzahl der bereits für einen Dienst abgestellten Rechner sowie der insgesamt verfügbaren Rechnerkapazität. Ein Beispiel für die Güte mit der ein Dienst bereitgestellt wird ist die Antwortzeit, das heißt die Zeit, in der ein Dienst eine eingehende Anfrage beantwort. Daneben können auch andere, nicht technische sondern ökonomische Überlegungen in Betracht gezogen werden, zum Beispiel verschiedene Prioritäten von Kunden, die die Dienste eines den Rechnerverbund betreibenden Netzwerkdienstanbieters nutzen. Bei bekannten Verfahren zur automatischen Konfiguration von Rechnerverbünden wird häufig eine Vielzahl von Entscheidungskriterien eingesetzt, die oft in hohem Maße dienstspezifisch sind. Als Folge sind die Kriterien miteinander nicht vergleichbar, was zu unvorhersehbaren Effekten bei der automatischen Konfiguration führen kann. Dieses kann ein umfangreiches manuelles Eingreifen eines Administrators bei der Konfiguration des Rechnerverbundes notwendig machen. Letztlich wird aus diesem Grund häufig auf die Berücksichtigung dienstspezifischer Kriterien verzichtet.

Es ist daher eine Aufgabe der vorliegenden Erfindung, ein Verfahren zur Konfiguration eines Rechnerverbundes anzugeben, das in hohem Maße automatisiert ist und die vorhandenen Rechner optimal auf die zu erbringenden Dienste aufteilt. Es ist eine weitere Aufgabe der vorliegenden Erfindung, einen Rechnerverbund anzugeben, der zur Ausführung eines derartigen Verfahrens geeignet ist.

Diese Aufgabe wird durch die unabhängigen Patentansprüche gelöst. Vorteilhafte Weiterbildungen und Ausgestaltungen sind in den jeweiligen abhängigen Ansprüchen angegeben.

Gemäß einem ersten Aspekt der Erfindung wird die Aufgabe durch ein Verfahren zur Konfiguration eines Rechnerverbundes mit einer Mehrzahl von Rechnern gelöst, das die folgenden Schritte aufweist: Es wird mindestens eine Rechnergruppe zur Bereitstellung jeweils eines Dienstes vorgegeben, wobei jeder Rechnergruppe anfangs jeweils einer der Rechner zugewiesen wird, auf dem ein dem jeweiligen Dienst und der entsprechenden Rechnergruppe zugeordneter Agent ausgeführt wird. Es wird eine Anforderungsanfrage mindestens eines der Agenten von einer zentralen Steuereinheit entgegengenommen, wobei die Anforderungsanfrage die Bereitstellung mindestens eines weiteren Rechners zu der Rechnergruppe, der der anfordernde Agent zugewiesen ist, betrifft. Zu einer Mehrzahl von möglichen Konfigurationen des Rechnerverbunds, die der Anforderungsanfrage genügen, wird je eine Bewertungszahl ermittelt. Aus der Menge der ermittelten Bewertungszahlen wird eine ausgezeichnete Bewertungszahl bestimmt. Der Rechnerverbund wird anschließend in einer zur ausgezeichneten Bewertungszahl gehörigen Konfiguration konfiguriert.

Im dem Verfahren teilt sich die Verwaltung der Rechner auf in die vom Agenten vorgenommene Verwaltung innerhalb der Rechnergruppen und die Verwaltung der Rechnergruppen durch die zentrale Steuereinheit. Die relativ große Autonomie, die die Agenten im Hinblick auf die Verwaltung der ihnen zugeteilten Rechner haben, bedingt eine hohe Fehlertoleranz des Rechnerverbunds auch beim Ausfall der zentralen Steuereinheit und entlastet die Steuereinheit, wodurch diese für den Anschluss einer Vielzahl von Agenten geeignet ist.

Die Bestimmung einer Bewertungszahl für eine Konfiguration macht die möglichen Konfigurationen auf einfache Weise untereinander vergleichbar, wodurch konkurrierende Anforderungen der unterschiedlichen Dienste auf einheitliche Art betrachtet werden können.

In einer vorteilhaften Ausführungsform des Verfahrens betrifft die Anforderungsanfrage die Bereitstellung genau eines weiteren Rechners. Auf diese Weise kann das Verfahren besonders unaufwändig umgesetzt werden.

In einer weiteren vorteilhaften Ausführungsform des Verfahrens ist ein Toleranzwert vorgegeben und es wird in dem letzten Schritt des oben genannten Verfahrens der Rechnerverbund nur dann in der ermittelten ausgezeichneten Konfiguration konfiguriert, wenn die zugehörige Bewertungszahl kleiner ist als der Toleranzwert. Auf diese Weise wird ein zweistufiger Entscheidungsprozess realisiert, bei dem zunächst aus der Menge der möglichen Konfigurationen die am besten geeignete, ausgezeichnete Konfiguration herausgesucht wird (ein relatives Kriterium), diese jedoch nur dann eingenommen wird, wenn sie eine unterhalb des Toleranzwertes liegende Bewertungszahl aufweist (ein absolutes Kriterium). Der zweistufige Entscheidungsprozess macht das Regelverhalten des Verfahrens vorhersehbarer, wodurch die Gefahr eines unerwünschten Regelverhaltens, das zum Beispiel mit Oszillationen einhergeht, verringert wird. Das Verfahren ist damit besonders gut zur automatischen Durchführung geeignet.

In einer weiteren vorteilhaften Ausführungsform des Verfahrens sind zu den Diensten Dienstrelevanzwerte vorgegeben und die Bewertungszahlen zu einer möglichen Konfiguration werden abhängig von den Dienstrelevanzwerten bestimmt.

In einer weiteren vorteilhaften Ausführungsform des Verfahrens sind zu den Rechnern und den Diensten Leistungsklassen vorgegeben, die die Eignung eines Rechners zur Erbringung eines Dienstes kennzeichnen. Die Bewertungszahl zu einer möglichen Konfiguration wird abhängig von den Leistungsklassen, die den Rechnern und den von den Rechnern gemäß der Zuweisung zu Rechnergruppen zu erbringenden Diensten zugeordnet sind, bestimmt.

Über die Dienstrelevanzwerte und die Leistungsklassen können spezifische Erfordernisse der Dienste und Merkmale der Rechner auf einfache Weise in die Bewertungszahlen einfließen.

In einer weiteren vorteilhaften Ausführungsform des Verfahrens wird die Bewertungszahl zu einer möglichen Konfiguration abhängig von einem Zeitraum bestimmt, der seit der Umkonfiguration eines Rechners, der in der möglichen Konfiguration zur Erbringung eines Dienstes vorgesehenen ist, vergangen ist. Auf diese Weise wird erreicht, dass die Historie der Umkonfigurationen des Rechnerverbunds in die Bewertungszahlen eingeht, was der Verringerung von Oszillationen im Regelverhalten dient.

Weitere vorteilhafte Ausführungsformen sind in weiteren abhängigen Ansprüchen angegeben.

Gemäß weiterer Aspekte der Erfindung wird die Aufgabe auch durch einen Rechnerverbund und ein Computerprogramm gelöst, die zur Durchführung des beschriebenen Verfahrens geeignet sind. Die Vorteile entsprechen denen des ersten Aspekts.

Die Erfindung wird nachfolgend anhand von Ausführungsbeispielen mit Hilfe von fünf Figuren näher erläutert.

Es zeigen:
Figur 1 eine schematische Darstellung der Struktur eines Rechnerverbunds,
Figur 2 ein Flussdiagramm eines Verfahrens zur Konfiguration eines Rechnerverbundes,
Figur 3 eine tabellarische Darstellung möglicher Konfigurationen des in Figur 1 dargestellten Rechnerverbundes,
Figur 4 eine schematische Darstellung der Struktur eines weiteren Rechnerverbunds und
Figur 5 Ausschnitte eines Rechnerverbunds mit Adaptern in zwei verschiedenen Ausführungen.

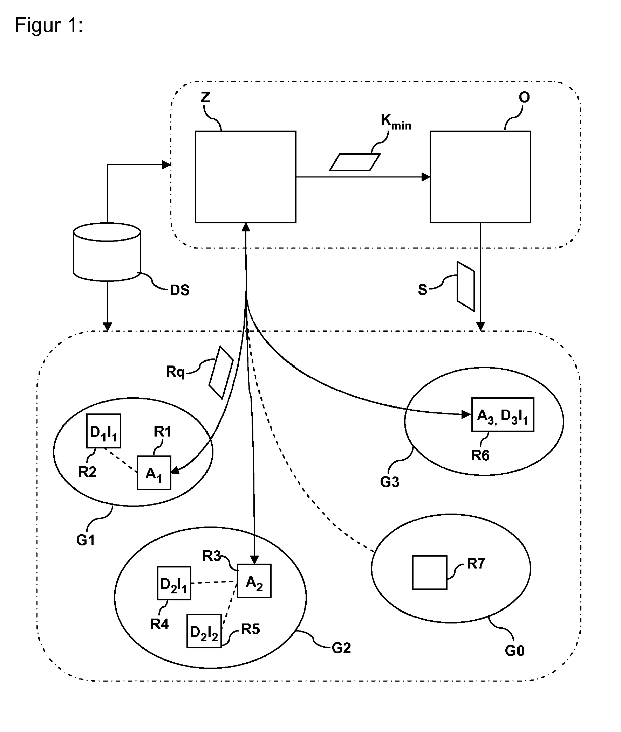

In der Figur 1 ist die Struktur eines Rechnerverbundes schematisch dargestellt. Der Rechnerverbund umfasst sieben Rechner R1 bis R7, die zur Bereitstellung von Diensten über ein Netzwerk für Benutzer des Rechnerverbundes zur Verfügung stehen. Die Rechner R1 bis R7 sind in logischer Weise drei Rechnergruppen G1, G2, G3 sowie einer weiteren Rechnergruppe G0 zugeordnet. Die Rechnergruppe G1 umfasst die Rechner R1 und R2, wobei auf dem Rechner R1 ein Agent A1 und auf dem Rechner R2 eine Dienstinstanz D1I1 abläuft. Die Gruppe G2 umfasst die Rechner R3, R4 und R5, wobei auf dem Rechner R3 ein Agent A2 und auf den Rechnern R4 beziehungsweise R5 eine Dienstinstanz D2I1 beziehungsweise D2I2 abläuft. Die Rechnergruppe G3 umfasst den Rechner R6, auf dem ein Agent A3 und eine Dienstinstanz D3I1 ausgeführt werden. Die weitere Rechnergruppe G0 umfasst den Rechner R7, der zum dargestellten Zeitpunkt ungenutzt ist. Die Agenten A1, A2 und A3 der jeweiligen Gruppen G1, G2 und G3 sind zur Übermittlung von Anforderungsanfragen Rq mit einer zentralen Steuereinheit Z verbunden. Die zentrale Steuereinheit Z ist zur Übermittlung einer Konfiguration Kmin mit einem Orchestrator O verbunden. Der Orchestrator O ist seinerseits zur Übermittlung von Strukturierungsanweisungen S mit den Rechnern R1 bis R7 verbunden. Die zentrale Steuereinheit Z und der Orchestrator O sowie die Rechner R1 bis R7 haben Zugriff auf einen gemeinsamen Datenspeicher DS.

Bezugszeichen ohne Index bezeichnen im Folgenden die Gesamtheit der jeweiligen Elemente oder ein nicht weiter spezifiziertes Element der Gesamtheit. Der Ausdruck "Rechner R" kann sich also beispielsweise auf die Menge der Rechner R1 bis R7 beziehen oder auf einen nicht näher ausgezeichneten Rechner aus der Menge der Rechner R1 bis R7.

Der in Figur 1 dargestellte Rechnerverbund umfasst beispielhaft und aus Gründen der Übersichtlichkeit nur die sieben Rechner R1 bis R7 und ist zum Zeitpunkt der Darstellung zur Bereitstellung von drei Diensten D1, D2 und D3 durch die Rechnergruppen G1, G2 und G3 eingerichtet. Die Zahl von sieben Rechnern R und drei Diensten D ist lediglich beispielhaft anzusehen und in keiner Weise beschränkend. Das im Rahmen dieser Anmeldung dargestellte Verfahren zur Konfiguration eines Rechnerverbunds ist insbesondere für größere, gegebenenfalls einige tausend Rechner umfassende und eine Vielzahl von Diensten bereitstellende Rechnerverbunde geeignet. Vorzugsweise aber nicht zwingend handelt es sich bei den Rechnern R um so genannte Bladeserver, die neben einem oder mehreren Prozessoren zumindest einen Arbeitsspeicher und Schnittstellen zum Netzwerkanschluss aufweisen und durch ihre einheitliche Bauart die Administration stark vereinfachen. Ein lokaler nichtflüchtiger Datenspeicher, zum Beispiel ein magnetisches Festplattenlaufwerk, kann, muss aber nicht unbedingt vorhanden sein. Alternativ zum lokalen nichtflüchtigen Datenspeicher kann eine zentrale Datenspeicherung mit Zugriff über ein Netzwerk vorgesehen sein. Als zentraler Datenspeicher kann der in Figur 1 dargestellte Datenspeicher DS fungieren oder ein weiterer Datenspeicher in Form eines Netzwerkspeichers (Network Attached Storage, NAS) vorhanden sein.

Ein Netzwerkanschluss der einzelnen Rechner R ist aus Gründen der Übersichtlichkeit in Figur 1 nicht dargestellt. Über einen Netzwerkanschluss sind die Rechner R sowohl mit den Benutzern, die die Dienstleistungen des Rechnerverbunds in Anspruch nehmen, als auch mit der zentralen Steuereinheit Z, dem Orchestrator O und gegebenenfalls einem zentraler Datenspeicher verbunden. Aus Sicherheitsgründen werden häufig getrennte Netzwerke eingesetzt, von denen eines öffentlich ist und die Rechner R, gegebenenfalls über einen oder mehrere Verteiler (auch Router oder Switches genannt), den Benutzern des Rechnerverbundes zugänglich macht. Das andere, nicht öffentliche Netzwerk dient der Verbindung der Rechner R mit der zentralen Steuereinheit Z und dem Orchestrator O. Über das nicht öffentliche Netzwerk kann ebenfalls der Zugriff der Rechner R auf einen zentralen Datenspeicher realisiert werden. Alternativ ist möglich, ein drittes Netzwerk für diesen Datenspeicherzugriff (Storage Area Network, SAN) vorzusehen. Die Trennung in mehrere Netzwerke kann dabei physikalischer Natur sein oder es kann sich um eine nur logische Trennung nur eines physikalischen Netzwerkes in mehrere Bereiche handeln, zum Beispiel über unterschiedliche Adressräume.

Die von Benutzern des Rechnerverbands in Anspruch genommenen Dienstleistungen, kurz Dienste D genannt, werden von den so genannten Dienstinstanzen DI, die auf einigen der Rechner R ausgeführt werden, bereitgestellt. Für jeden Dienst steht dabei mindestens eine dieser Dienstinstanzen DI bereit. Die Dienstinstanzen DI sind Softwareanwendungen, die dazu eingerichtet sind, eine über ein Netzwerk empfangene Anfrage entgegenzunehmen, zu bearbeiten und gegebenenfalls eine Antwort auf die Anfrage zurückzusenden.

Beispielhaft sei im Ausführungsbeispiel der Figur 1 der Dienst D1 ein Webservice, der auf eine entsprechende Anfrage eine Webseite generiert und zurückschickt, der Dienst D2 ein Datenbankservice, der auf eine entsprechende Anfrage Daten in eine Datenbank aufnimmt oder aus dieser ausgibt oder in dieser manipuliert, und der Dienst D3 ein Backup-Service, der auf Anfrage von benutzerspezifischen Daten oder Datenbankinhalten eine Sicherheitskopie erstellt. Im Ausführungsbeispiel der Figur 1 steht zum Zeitpunkt der Darstellung zur Erbringung des Dienstes D1 nur die eine Dienstinstanz D1I1 bereit, für den Dienst D2 sind die Dienstinstanzen D2I1 und D2I2 und für den Dienst D3 ist die Dienstinstanz D3I1 vorgesehen. Bei der Bezeichnung der Dienstinstanzen DI kennzeichnet der erste Index den Dienst. Mit dem zweiten Index werden die für einen Dienst vorgesehenen Instanzen unterschieden. Eine Dienstinstanz DI kann dabei auf einem eigens vorgesehene Rechner R ablaufen (wie im Fall der Dienstinstanzen D1I1, D2I1 und D2I2) oder auch auf einem Rechner R ablaufen, auf dem ein Agent A ausgeführt wird (wie im Fall der Dienstinstanz D3I1).

Auch ist es möglich, dass mehrere, einem Dienst D zugeordnete Dienstinstanzen DI auf einem Rechner R ablaufen.

Innerhalb jeder der Rechnergruppen G1, G2 und G3 kontrolliert der Agent A1, A2 beziehungsweise A3 den jeweiligen Dienst D1, D2 beziehungsweise D3. Der Agent A1 bis A3 ist ein Softwareprogramm, das entweder exklusiv auf einem der Rechner abläuft, wie im Fall der Rechnergruppen G1 und G2, oder sich einen Rechner mit zumindest einer der Dienstinstanzen teilt, wie im Fall der Rechnergruppe G3. Die Agenten A verwalten die einem jeweiligen Dienst D zugeordneten Dienstinstanzen DI.

Jeder Agent A ist dazu eingerichtet, auf Basis vorgegebener, für den von ihm betreuten Dienst D spezifischer Kriterien zu entscheiden, ob eine weitere Dienstinstanz DI zur Erbringung der Dienstleistung erforderlich ist. Dazu sind die Agenten A mit den Dienstinstanzen DI verbunden und verfügen über Mittel, die Auslastung der Dienstinstanzen DI zu erfassen und zu bewerten. Ermittelt einer der Agenten A, dass der von ihm betreute Dienst D nicht mit der vorgegebenen, erwünschten Performance Benutzeranfragen erfüllen kann, sendet er eine Anforderungsanfrage Rq an die zentrale Steuereinheit Z, wie in der Figur 1 beispielhaft für den Agenten 1 dargestellt ist.

In diesem Zusammenhang könnte ebenfalls vorgesehen sein, dass die Agenten A feststellen, ob der Dienst D auch noch mit weniger als den aktuell tätigen Dienstinstanzen DI ausreichend performant bereitgestellt werden könnte, zum Beispiel nach einem Rückgang von Benutzeranfragen. Der jeweilige Agent A sendet dann eine (negative) Anforderungsanfrage an die zentrale Steuereinheit Z.

Die Agenten A können zudem dazu eingerichtet sein, Anfragen eines Benutzers abhängig von der Auslastung der den verschiedenen für einen Dienst D zuständigen Dienstinstanzen DI sowie ihrer Leistungsfähigkeit an die Dienstinstanzen DI zu verteilen. Alternativ kann diese Tätigkeit auch von einem separaten Netzwerklastverteiler ausgeführt werden.

Zusätzlich können die Agenten A dazu eingerichtet sein, eine Fehlererkennung und -behandlung auf Ebene der Dienstinstanzen DI durchzuführen. Dieses kann beispielsweise bedeuten, dass eine nicht mehr funktionsfähige Dienstinstanz DI erkannt wird und vom Agenten selbsttätig und ohne eine Beteiligung der zentralen Steuereinheit Z oder des Orchestrators O gestoppt, gegebenenfalls neu installiert und wieder gestartet wird. Falls eine solche Fehlerkorrektur erfolglos ist oder falls ein Fehler erkannt wird, der nicht auf Ebene der Dienstinstanz DI sondern auf einer übergeordneten Ebene, zum Beispiel des Betriebssystems oder der Hardware des Rechners R, auf dem die vermeintlich fehlerhafte Dienstinstanz DI abläuft, lokalisiert ist, ist die Fehlerkorrekturkompetenz eines Agenten A überschritten und dieser ist dazu eingerichtet, eine entsprechende Fehlermeldung an die zentrale Steuereinheit Z zu senden. Dadurch ergibt sich eine natürliche Kompetenz-Hierarchie, bei der die Agenten A soviel Selbständigkeit wie nötig haben, um die Komplexität der Zentralinstanz klein zu halten.

Aufgabe der zentralen Steuereinheit Z ist es, die Anforderungsanfragen Rq von den Agenten A entgegenzunehmen und, basierend auf Informationen über die Anzahl und die Art der zu erbringenden Dienste D und die Anzahl und die Art der dafür verfügbaren Rechner R im Rechnerverbund RV, eine die Anforderungsanfragen Rq möglichst gut erfüllende Konfiguration Kmin zu ermitteln. Eine Konfiguration K bezeichnet eine eindeutige Zuordnung eines jeden Rechners R zu genau einer der Rechnergruppen G oder der weiteren Rechnergruppe G0.

Die Information über die Anzahl und die Art der zu erbringenden Dienste D sowie die Anzahl und Art der verfügbaren Rechner R ist dabei in dem Datenspeicher DS gespeichert. Die von der zentralen Steuereinheit Z ermittelte Konfiguration Kmin wird an den Orchestrator O weitergegeben, der, ebenfalls auf Basis der in dem Datenspeicher DS gespeicherten Informationen über die Rechner R und die bereitzustellenden Dienste D Strukturierungsanweisungen S an die Rechner R des Rechnerverbunds und gegebenenfalls auch an die Agenten A ausgibt. Mittels der Strukturierungsanweisungen S können Rechner R gestoppt, heruntergefahren und neu gestartet werden, wobei der Startvorgang das Laden eines Betriebssystems entweder von einer lokalen Speichermöglichkeit des Rechners R oder von einem zentralen Datenspeicher umfasst. Weiterhin kann vorgesehen sein, dass die Agenten A darüber informiert werden, ob und welcher Rechner R zur Erbringung des von dem jeweiligen Agenten A betreuten Dienstes D zusätzlich benutzt werden kann oder welche Rechner diesem Dienst D entzogen werden.

Die zentrale Steuereinheit Z und der Orchestrator O sind ihrerseits Softwareprogramme, die auf einem gemeinsamen Rechner oder auf separaten Rechnern, die in der Figur 1 nicht dargestellt sind, ausgeführt werden können. In einer weiteren Ausgestaltung können die zentralen Steuereinheit Z und der Orchestrator O auch auf einem oder mehreren der Rechner R, die von ihnen selbst verwaltet werden, ausgeführt werden. Weiterhin ist denkbar, dass die Aufgaben der zentralen Steuereinheit Z und des Orchestrators O in einem Programm integriert sind, das dann ebenfalls als zentrale Steuereinheit bezeichnet würde.

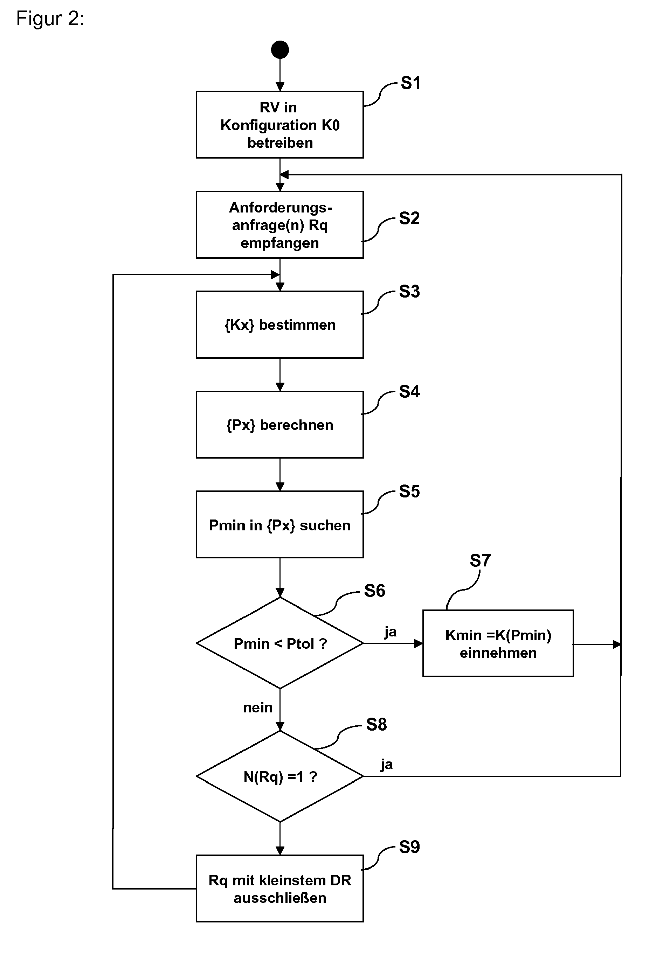

Im Zusammenhang mit dem Flussdiagramm der Figur 2 wird im Folgenden ein Verfahren zur Konfiguration eines Rechnerverbunds am Beispiel des in Figur 1 gezeigten Rechnerverbunds näher erläutert.

In einem ersten Schritt S1 wird der Rechnerverbund zunächst in einer Konfiguration K0 betrieben.

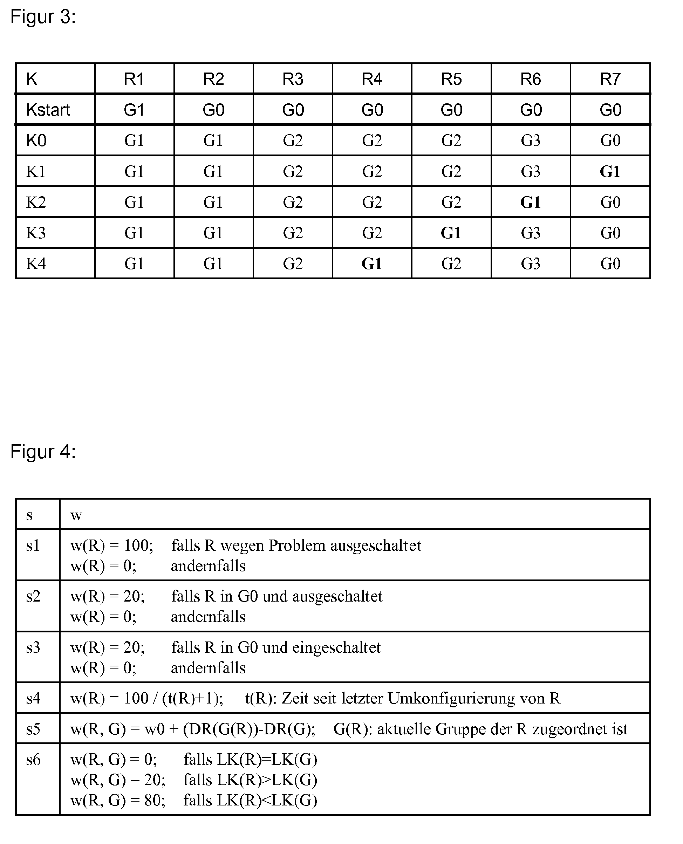

In der in Figur 3 dargestellten Tabelle sind verschiedene Konfigurationen K für den in Figur 1 gezeigten Rechnerverbund wiedergegeben. In einer Zeile der Tabelle ist jeweils eine Konfiguration K dargestellt. Zur Unterscheidung sind die verschiedenen Konfigurationen K mit einem Index versehen. In den Spalten der Tabelle ist für jeden der Rechner R1 bis R7 des Rechnerverbunds angegeben, zu welcher zum gegebenen Zeitpunkt vorhandenen Rechnergruppen G oder weiteren Rechnergruppe G0 der entsprechende Rechner R zugeordnet ist.

Die Durchführung des anmeldungsgemäßen Konfigurationsverfahrens setzt voraus, dass zumindest ein Dienst D vom Rechnerverbund bereitgestellt werden soll und für diesen Dienst D ein Rechner einer Rechnergruppe G zugeordnet ist, auf dem ein diesen Dienst betreuender Agent A ausgeführt wird. Ein Beispiel für eine Minimalkonfiguration zur Durchführung des anmeldungsgemäßen Verfahrens ist in der ersten Zeile der Tabelle der Figur 3 als Konfiguration Kstart wiedergegeben. Bei der Konfiguration Kstart ist nur die Rechnergruppe G1 zur Bereitstellung des Dienstes D1 vorgesehen. Der Rechnergruppe G1 ist der Rechner R1 zur Ausführung des Agenten A1 zugeordnet. Die weiteren Rechner R2 bis R7 sind ungenutzt und dementsprechend der weiteren Rechnergruppe G0 zugeordnet. Ausgehend von dieser Konfiguration Kstart würde das Konfigurationsverfahren anhand von Anforderungsanfragen Rq des Agenten A1 eine bedarfsgerechte Zuteilung der Rechner R2 bis R7 zur Rechnergruppe G1 vornehmen. Falls vom Rechnerverbund RV weitere Dienste D erbracht werden sollen, wie beispielsweise die Dienste D2 und D3, sind von einem Systemadministrator die entsprechenden Rechnergruppen G2 und G3 anzulegen, denen jeweils zumindest ein Rechner R zum Ablauf des entsprechenden Agenten A2 und A3 manuell zuzuordnen ist. Weiterhin ist dieser Agent A2 und A3 zu starten. Die bedarfsgerechte Zuteilung von Rechnern R zu den Rechnergruppen G2 und G3 wird dann wiederum automatisch von dem hier beschriebenen Konfigurationsverfahren geleistet. Auf diese Weise hätte zum Beispiel ausgehend von der Konfiguration Kstart der Rechnerverbund die in der Figur 1 gezeigte und in der zweiten Zeile der Tabelle in Figur 3 wiedergegebene Konfiguration K0 erreichen können.

Im Folgenden soll das Verfahren ausgehend von dieser Konfiguration K0 des Rechnerverbunds RV beschrieben werden. Beim Betrieb des Rechnerverbundes in der Konfiguration K0 werden der Webdienst D1, der Datenbankdienst D2 und der Backupdienst D3 von den der jeweiligen Rechnergruppe G1 bis G3 zugeordneten Rechnern R2, R4, R5 und R6 erbracht. Die Agenten A1 bis A3 überwachen dabei die Dienste D1 bis D3 um festzustellen, ob die Dienste D1 bis D3 mit der geforderten Performance geleistet werden. Dazu können für einen Dienst D charakteristische Leistungsparameter bestimmt und mit vorgegebenen Werten verglichen werden. Beispielsweise kann für den Webdienst D1 eine maximale Antwortzeit definiert sein, innerhalb derer eine Anfrage eines Nutzers des Rechnerverbunds beantwortet sein sollte. Für andere Dienste können andere Parameter zur Beurteilung herangezogen werden. Verfahren dazu sind aus dem Stand der Technik bekannt und nicht Gegenstand dieser Anmeldung.

Erkennt einer der Agenten A1 bis A3, dass der Dienst, für den er zuständige ist, nicht mit ausreichender Güte erbracht wird, sendet er in einem Schritt S2 eine Anforderungsanfrage Rq an die zentrale Steuereinheit Z, die von dieser entgegengenommen wird. Als Beispiel sei angenommen, dass der Agent A1 eine zulange Antwortzeit beim Webdienst D1, zum Beispiel aufgrund einer gestiegenen Anzahl von Benutzern des Rechnerverbunds, feststellt. Der Agent A1 sendet daraufhin die Anforderungsanfrage Rq an die zentrale Steuereinheit Z, durch die er bei der zentralen Steuereinheit Z die Zuteilung eines weiteren Rechners R zu seiner Rechnergruppe G1 zur Erbringung des Dienstes D1 anfordert. Im gezeigten Ausführungsbeispiel ist vorgesehen, dass jeweils nur die Zuteilung genau eines weiteren Rechners R in einer Anforderungsanfrage Rq angefragt werden kann.

Nach einem Empfang der Anforderungsanfrage Rq in dem Schritt S2 bestimmt die zentrale Steuereinheit Z daraufhin in einem Schritt S3 eine Menge aller möglichen Konfigurationen {Kx}, mit der die Anfrage des Agenten A1 befriedigt werden würde. Der Index x bei einer Konfiguration K oder einer Bewertungszahl P ist im Folgenden als Variable für einen Index anzusehen. Die abgekürzte Mengenschreibweise {Kx} bezeichnet eine Menge mehrerer, in ihren Indizes unterscheidbarer Konfigurationen. Die Menge aller möglichen Konfigurationen {Kx} des Beispielsfalls wird durch die Konfigurationen K1 bis K4 gebildet, die im mittleren Teil der Tabelle in Figur 3 wiedergegeben sind. Diese Konfigurationen K1 bis K4 entstehen aus der Konfiguration K0 dadurch, dass jeweils einer der einer anderen Rechnergruppe als G1 beziehungsweise der weiteren Rechnergruppe G0 zugeordneter Rechner R dieser Rechnergruppe genommen und der Rechnergruppe G1 zugeordnet wird.

Bei der Bestimmung der Menge der möglichen Konfigurationen {Kx} können bestimmte vorgegebene Randbedingungen berücksichtigt werden. Zum Beispiel kann vorgesehen sein, dass mindestens ein Rechner R für eine Rechnergruppe G für die Ausführung des jeweiligen Agenten A verbleiben muss. Bei einer solchen Vorgabe würde die Konfiguration K2 der Tabelle von Figur 3 von vorne herein ausgeschlossen sein und nicht der Menge der möglichen Konfigurationen {Kx} angehören. Es ist jedoch auch möglich, eine solche Konfiguration zuzulassen, und die Besonderheiten dieser Konfiguration bei einer im Folgenden vorzunehmenden Bewertung dieser Konfiguration zu berücksichtigen.

In einer alternativen Ausgestaltung des Verfahrens kann vorgesehen sein, mehrere Anforderungsanfragen Rq entgegenzunehmen und in den auf den Schritt S2 folgenden Schritten gemeinsam zu verarbeiten. Dazu kann beispielsweise eine Wartezeit im Schritt S2 vorgesehen sein, innerhalb derer eingehende Anforderungsanfragen Rq unterschiedlicher Agenten A entgegengenommen und gespeichert werden. Auch ist denkbar, dass Anforderungsanfragen Rq bereits während eines Verfahrensdurchlaufs, also während der Schritte S3 bis S9, im Hintergrund entgegengenommen werden können und im nächsten Durchlauf dann bearbeitet werden.

Wenn mehrere Anforderungsanfragen Rq verarbeitet werden, wird in dem Schritt S3 die Menge aller möglichen Konfigurationen {Kx} als Verbundmenge aller möglichen Konfigurationen, die jeweils mindestens eine der Anforderungsanfragen Rq erfüllt, bestimmt. Als Beispiel seien zwei Anforderungsanfragen Rq in der Bearbeitungszeit eines vorherigen Verfahrensdurchlaufs oder in der Wartezeit in dem Schritt S2 entgegengenommen worden, eine Anforderungsanfrage Rq1 des Agenten A1 und eine Anforderungsanfrage Rq2 des Agenten A2. Beide Anforderungsanfragen Rq1, Rq2 betreffen die Zuteilung jeweils eines weiteren Rechners zu der jeweiligen Rechnergruppe G1 und G2. Es wird nun die Menge der möglichen Konfigurationen bestimmt, die die Anforderungsanfrage Rq1 erfüllt, und die Menge der möglichen Konfigurationen, die die Anforderungsanfrage Rq2 erfüllt. Die Menge der möglichen Konfigurationen {Kx}, mit der das Verfahren in den weiteren Schritten durchgeführt wird, ist dann aus der Verbundmenge der die Anforderungsanfragen Rq1 und Rq2 erfüllenden Konfigurationsmengen gegeben. Zudem kann vorgesehen sein, auch die Menge der möglichen Konfigurationen, die beide Anforderungsanfragen Rq1 und Rq2 erfüllt, zu bestimmen und in die Verbundmenge aufzunehmen.

In einem folgenden Schritt S4 wird zu jeder Konfiguration Kx aus der Menge der möglichen Konfigurationen {Kx} eine Bewertungszahl Px bestimmt. Die Bewertungszahl Px spiegelt wider, wie gut oder schlecht die Konfiguration Kx zur Erbringung aller angeforderten Dienste D des Rechnerverbunds RV geeignet scheint. Ein geeignetes Verfahren zur Bestimmung von den Bewertungszahlen Px ist weiter unten detaillierter dargestellt. Die Bewertungszahlen Px können so definiert sein, dass eine große Zahl eine gut geeignete Konfiguration Kx darstellt oder umgekehrt, dass eine kleine Zahl eine gut geeignete Konfiguration Kx kennzeichnet. Beispielhaft wird bei den im Rahmen dieser Anmeldung dargestellten Ausführungsbeispielen von dem letzteren Fall ausgegangen, bei dem eine kleinere Bewertungszahl Px also eine günstigere Konfiguration kennzeichnet, und eine größere Bewertungszahl Px eine ungünstigere Konfiguration Kx kennzeichnet. In einem solchen Fall können die Bewertungszahlen Px als Strafzahlen angesehen werden, die umso größer sind, je ungünstiger eine Konfiguration Kx ist.

In einem Schritt S5 wird von allen bestimmten Bewertungszahlen Px die kleinste Bewertungszahl Pmin als ausgezeichnete Bewertungszahl herausgesucht. Im vorliegenden Fall weist die Konfiguration K1 die kleinste Bewertungszahl Pmin=P1 auf. Diese Konfiguration, zu der die ausgezeichnete Bewertungszahl Pmin berechnet wurde, wird im Folgenden auch als ausgezeichnete Konfiguration Kmin bezeichnet.

In einem Schritt S6 wird die gefundene kleinste Bewertungszahl Pmin mit einer vorgegebenen tolerierbaren Bewertungszahl Ptol verglichen. Falls Pmin kleiner als Ptol ist, verzweigt das Verfahren zu einem Schritt S7, in dem die ausgezeichnete Konfiguration Kmin, zu der die kleinste Bewertungszahl Pmin berechnet wurde, vom Rechnerverbund eingenommen wird. Um dieses zu erreichen, wird die ausgezeichnete Konfiguration Kmin von der zentralen Steuereinheit Z an den Orchestrator O weitergegeben. Daraufhin bestimmt der Orchestrator O anhand der Konfiguration Kmin und der aktuell vorliegenden Konfiguration K0 eine oder mehrere Strukturierungsanweisungen S und gibt sie an die Rechner R aus.

Eine Strukturierungsanweisung S ist dabei zum Beispiel eine Konfigurationsanweisung an einen der Rechner R. Über die Strukturierungsanweisung S kann ein Rechner R gestartet, gestoppt oder heruntergefahren werden. Weiterhin ist es möglich, ein Abbild (Image) eines Betriebssystems zu laden und damit den Rechner R mit diesem Betriebssystem zu starten. Auch können Dienstinstanzen DI geladen und gestartet werden. Die Strukturierungsanweisung S ist somit geeignet, den Rechnerverbund derart umzustrukturieren, dass die von der zentralen Steuereinheit Z ermittelte ausgezeichnete, günstigste Konfiguration Kmin tatsächlich eingenommen wird.

Darüber hinaus kann vorgesehen sein, über die Strukturierungsanweisungen S einen Agenten A davon zu unterrichten, welcher Rechner R einer Gruppe G neu zugeordnet wurde und welche neu gestartete oder zu startende Dienstinstanz DI damit zur Erbringung des Dienstes D bereitsteht. Alternativ ist möglich, dass diese Information von der zentralen Steuereinheit Z an den entsprechenden Agenten A übermittelt wird. Dabei kann vorgesehen sein, dass die Dienstinstanzen DI über den Orchestrator O und die Strukturierungsanweisungen S auf einen Rechner R geladen, aber erst durch den Agenten A gestartet werden. Auch ist möglich, dass über die Strukturierungsanweisungen S die Rechner R nur vorbereitet werden, also ein Betriebssystem geladen und der Rechner R damit gestartet wird. Die Dienstinstanzen werden dann vom Agenten A geladen und gestartet. Dabei ist sicherzustellen, dass die neu bereitstehende Dienstinstanz DI vom oder beim Agenten A registriert wird, so dass der Agent A diese in die Verteilung der Anfragen auf alle für ihn zuständigen Dienstinstanzen einbeziehen kann und die korrekte Bearbeitung von Anfragen überwachen kann. Weiterhin ist vorgesehen, dass ein Agent A, über dessen Anforderungsanfrage Rq positiv entschieden wurde, keine weiteren Anforderungsanfragen Rq stellten darf, bis der neu seiner Rechnergruppe G zugeteilte Rechner R eingerichtet ist, eine neue Dienstinstanz DI gestartet ist und deren Einfluss auf die Güte, mit der der Dienst D erbracht wird, feststellbar ist.

Der Wert für die maximal tolerierbare Bewertungszahl Ptol in Schritt S6 kann fest vorgegeben sein. Die Vorgabe wird auf Erfahrungswerten für einen bestimmten Rechnerverband RV sowie die von diesem bereitgestellten Dienste beruhen. In einer alternativen Ausgestaltung des Verfahrens kann auch vorgesehen sein, bei Überschreiten des angegebenen maximal tolerierten Bewertungszahlenwertes Ptol die aufgefundene Konfiguration Kmin nicht direkt abzulehnen, sondern eine Entscheidung über die Einnahme dieser Konfiguration Kmin einem Administrator des Systems vorzulegen. Auch ist denkbar, einen Zwischenbereich für die Bewertungszahl Pmin zu definieren, innerhalb dessen die Einnahme der Konfiguration Kmin zunächst zur manuellen Disposition gestellt wird. Darüber hinaus sind adaptive Verfahren denkbar, mit denen die zunächst vorgegebenen Schwellenwerte automatisch anhand getroffener Entscheidung eines Administrators variiert werden.

Nach erfolgter Umstrukturierung des Rechnerverbunds verzweigt das Verfahren zurück zum Schritt S2, in dem die zentrale Steuereinheit wiederum zur Entgegennahme und Bearbeitung weiterer Anforderungsanfragen Rq bereit ist.

Falls im Schritt S6 festgestellt wurde, dass die kleinste aufgefundene Bewertungszahl Pmin nicht kleiner als die vorgegebene tolerierbare Bewertungszahl Ptol ist, verzweigt das Verfahren zu einem Schritt S8.

In dem Schritt S8 wird abgefragt, auf wie vielen Anforderungsanfragen (in der Figur durch N(Rq) dargestellt) die in dem Schritt S3 bestimmte Menge der möglichen Konfigurationen {Kx} beruhte.

Falls der Bestimmung der Menge der möglichen Konfigurationen {Kx} nur eine Anforderungsanfrage zugrunde lag, verzweigt das Verfahren zurück zum Schritt S2, ohne zuvor die Konfiguration geändert zu haben. Ein solcher Fall tritt ein, wenn selbst die günstigste der möglichen Konfiguration Kmin nicht geeigneter als die aktuelle Konfiguration erscheint, beziehungsweise der Unterschied den Aufwand einer Umkonfiguration des Rechnerverbands nicht zu rechtfertigen scheint.

Falls der Bestimmung der Menge der möglichen Konfigurationen {Kx} mehr als eine Anforderungsanfrage zugrunde lag, verzweigt das Verfahren zu einem Schritt S9, in dem eine der eingegangenen Anforderungsanfrage Rq ausgeschlossen wird. Das Verfahren verzweigt daraufhin zurück zu dem Schritt S3, in dem die Menge der möglichen Konfigurationen {Kx} erneut bestimmt wird, nun allerdings ohne die ausgeschlossene Anforderungsanfrage zu berücksichtigen. Nachfolgend werden die Schritte S4 bis S6 ausgeführt, wobei durch den Ausschluss einer der Anforderungsanfragen Rq dann eine Konfiguration gefunden werden kann, die das Kriterium im Schritt S6 erfüllt. Dieses gilt insbesondere dann, wenn die Menge der möglichen Konfigurationen {Kx} in dem Schritt S3 beim Vorliegen mehrerer Anforderungsanfragen in der Weise bestimmt wird, dass jede der Konfigurationen alle aktuellen Anforderungsanfragen berücksichtigt. Falls auch nach Ausschluss einer der Anforderungsanfragen Rq das Kriterium in Schritt S6 immer noch nicht erfüllt wird, können sukzessive weitere Anforderungsanfragen Rq bei erneutem Ausführen des Schrittes S9 ausgeschlossen werden, bis entweder eine das Kriterium in Schritt 6 erfüllende Konfiguration Kmin gefunden wird, oder nur noch eine Anforderungsanfrage Rq überbleibt und entsprechend vom Schritt S8 zurück zum schritt S2 verzweigt wird, ohne dass eine neue Konfiguration Kmin eingenommen wurde.

Die Entscheidung, welche der Anforderungsanfragen Rq in dem Schritt S9 ausgeschlossen wird, wird im gezeigten Ausführungsbeispiel anhand einer Relevanz der Dienste D, für die die entsprechenden Anforderungsanfragen Rq gestellt werden, getroffen. Beispielsweise sind Dienste wie ein Datenbankdienst häufig Voraussetzung für andere bereitgestellte Dienste, wie ein Webdienst oder ein Dienst zur Betriebsverwaltung. Die Relevanz eines Dienstes D kann durch einen Dienstrelevanzwert DR festgelegt werden, der beispielsweise in der in Figur 1 gezeigten Datenstruktur DS gespeichert werden kann. In dem Schritt S9 wird dann die Anforderungsanfrage Rq ausgeschlossen, die der Agent A, dessen betreuter Dienst D den geringsten Dienstrelevanzwert DR aufweist, gestellt hat.

Bei komplexen Rechnerverbünden mit einer Vielzahl von Rechnern kann die Bestimmung der geeigneten Konfiguration Kmin in den Schritten S3 bis S5 eine nicht unerhebliche Zeit in Anspruch nehmen. Zudem ist es auch prinzipiell vorteilhaft, nach dem Einnehmen einer neuen Konfiguration eine gewisse Wartezeit verstreichen zu lassen, bevor eine erneute Umstrukturierung berechnet oder vorgenommen wird. Wird ein Rechnerverbund in zu geringem zeitlichen Abstand umkonfiguriert, kann der Performanceverlust durch sich bei der Umstrukturierung ergebende Ausfallzeiten von Rechnern (Zeit zum Herunterfahren, Abbild laden, Rechner neu starten usw.) den Performancegewinn durch die günstigere Konfiguration zunichte machen oder sogar übersteigen. Weiterhin kann eine zu häufige Umstrukturierung zu unerwünschten Oszillationen der Konfiguration führen. Es ist daher günstig, einen neuen Verfahrensdurchlauf ab dem Schritt S2 erst nach einer gewissen Wartezeit vorzunehmen.

Im Folgenden wird die Bestimmung der Bewertungszahlen Px zu einer Konfiguration Kx näher erläutert. Die Bewertungszahlen Px beschreiben, wie günstig oder ungünstig die Einnahme der zugehörigen Konfiguration Kx für den Rechnerverbund RV ist. Mathematisch können die Bewertungszahlen Px als Skalare definiert sein, wodurch sie sich auf einfache Weise miteinander vergleichen lassen. Im Rahmen der Anmeldung sollen kleinere Werte der Bewertungszahlen Px eine günstigere Konfiguration Kx kennzeichnen, wobei das angegebene Verfahren selbstverständlich auch mit einer umgekehrten Wertigkeitsreihenfolge durchgeführt werden kann.

Bei der Bestimmung der Bewertungszahlen Px ist eine Reihe von Kriterien zu berücksichtigen, beispielsweise ob ein Rechner R funktionsfähig ist oder nicht, ob ein Rechner R bereits einer anderen Rechnergruppe G zugeordnet ist und ob ein Rechner R von seiner Leistungsfähigkeit her überhaupt geeignet ist, eine bestimmte Dienstinstanz DI auszuführen. Weiterhin kann eine Prioritätsreihenfolge für die verschiedenen, zu erbringenden Dienste vorgegeben und berücksichtigt werden. Zudem ist es möglich und im Hinblick auf ein stabiles, nicht zu Oszillationen in der Konfiguration neigendes automatisches Konfigurationsverfahren vorteilhaft, Informationen über den bisherigen Verlauf der Umstrukturierungen zu berücksichtigen. Beispielsweise kann es als ungünstiger bewertet werden, wenn ein Rechner R, der erst unlängst einer Rechnergruppe G zugeteilt wurde, dieser Rechnergruppe G wieder genommen werden soll.

In einer vorteilhaften Ausgestaltung eines Verfahrens zur Bestimmung von Bewertungszahlen Px wird zu jeder Zuordnung eines Rechners R zu einer Rechnergruppe G oder weiteren Rechnergruppe G0 eine Teilbewertungszahl p(R, G) bestimmt, wobei sich die Bewertungszahl Px einer Konfiguration Kx als Summe der Teilbewertungszahlen p(R, G) für alle Kombinationen eines Rechners und einer Rechnergruppe G, G0, die die Konstellation Kx bilden, ergibt. Die Teilbewertungszahlen p(R, G) können vorteilhaft wiederum additiv anhand einer Mehrzahl von Kriterien und diesen Kriterien zugeordneten Bewertungspunkten s bestimmt werden. Die Bezeichnung "Strafpunkte" ergibt sich im vorliegend betrachteten Fall daher, dass kleinere Bewertungszahlen günstigere Konfigurationen kennzeichnen.

Es kann Strafpunkte s mit festem Strafwert w geben, wobei der Strafwert w zu der Teilbewertungszahl p(R, G) addiert wird, wenn das Kriterium zutrifft. Beispiele für Strafpunkte s sind in der Tabelle in der Figur 4 wiedergegeben. Zu den verschiedenen Strafpunkten s, die der Einfachheit halber durchnummeriert sind, ist in der Tabelle jeweils das Kriterium angegeben sowie der Strafwert w. Beispiele für Strafpunkte s, die mit einem festen Strafwert versehen sind und entweder berücksichtigt werden oder nicht sind der Strafwert s1 mit einem hohen Strafwert von beispielhaft 100, der vergeben wird, wenn der entsprechende Rechner wegen eines Problems ausgeschaltet ist. Mit einem geringeren Strafwert von 20 ist der Strafpunkt s2 versehen, der vergeben wird, wenn der Rechner ausgeschaltet, aber verfügbar, das heißt der weiteren Rechnergruppe G0 zugeordnet ist. Mit dem wiederum kleineren Strafwert von 10 ist der Strafpunkt s2 versehen, der vergeben wird, wenn der Rechner R bereits eingeschaltet und verfügbar ist. Der Vorteil von festen Strafpunkten s, die in Abhängigkeit von einem Kriterium entweder vergeben werden oder nicht, ist, dass ihre Berechnung schnell durchgeführt werden kann.

Daneben können Strafpunkte s mit einem variablen Strafwert w vorgesehen sein, wobei der Strafwert abhängig von den zugeordneten Kriterien und weiteren Parametern sein kann.

Ein Beispiel ist der Strafpunkt s4, dessen Strafwert w davon abhängt, wann der entsprechende Rechner R zuletzt Gegenstand einer Umkonfiguration (zum Beispiel Änderung seiner Gruppenzugehörigkeit) war. Im gezeigten Beispiel nimmt der Strafwert ausgehend von einem Anfangsstrafwert von 100 umgekehrt proportional mit der zurückliegenden Zeit t in Minuten seit der letzten Umstrukturierung ab.

Weiterhin können Strafpunkte s vorgesehen sein, die die Relevanz der Dienste D untereinander anhand des Dienstrelevanzwertes DR berücksichtigen. Der Strafwert s5 in der Tabelle in Figur 4 wird in einer Situation vergeben, in der ein Rechner einer Gruppe G zugeordnet werden soll, jedoch bereits einer anderen Gruppe G* zugeordnet ist. Der Strafwert des Strafpunkts s5 ist dann abhängig vom Unterschied in den Relevanzwerten DR der von den Gruppen G und G* zu erbringenden Dienste D und einem gewissen vorgegebenen Grundwert w0, der für dieses Beispiel nicht konkretisiert ist.

Ein weiteres Beispiel für einen Strafpunkt s mit variablem Strafwert ist durch den Strafpunkt s6 gegeben. In die Berechnung des Strafwertes w fließt ein, ob oder wie gut der entsprechende Rechner R von seiner Leistungsfähigkeit geeignet ist, einen bestimmten Dienst zu erbringen. Dazu können die Rechner R und die Dienste D in Leistungsklassen LK eingeteilt sein, die zu den Rechnern R und den Diensten D in der Datenstruktur DS abgespeichert sind. Die Einteilung in die Leistungsklassen LK kann beispielsweise auf der Größe eines in einem Rechner verfügbaren oder von einem Dienst benötigten Arbeitsspeichers oder einer Taktrate des Prozessors des Rechners beruhen. Auch die Ausstattung eines Rechners im Hinblick auf die Leistungsfähigkeit seiner Netzwerkanbindung (zum Beispiel Ethernet, Gigabit-Ethernet, Fibre Channel) kann sich in der Leistungsklasse LK widerspiegeln.

Wenn ein Rechner R derselben Leistungsklasse LK zugeteilt ist wie der Dienst D, der von dem Rechner R aufgrund seiner geplanten Gruppenzugehörigkeit G erbracht werden soll, ist vorgesehen, den Strafwert w=0 zu vergeben. Ist einem Rechner R dagegen eine höhere Leistungsklasse zugeteilt als dem Dienst D (beziehungsweise der Rechnergruppe G), wird ein mittlerer Strafwert, beispielhaft w=30, vergeben. Dieser mittlere Strafwert gibt wieder, dass es für das Gesamtsystem zumindest nicht vorteilhaft ist, einen "überqualifizierten" Rechner für einen Dienst einzusetzen. Ist einem Rechner R dagegen eine niedrigere Leistungsklasse zugeteilt als dem Dienst D, wird ein hoher Strafwert, beispielhaft w=80, vergeben. Dieser hohe Strafwert gibt wieder, dass es ungünstig ist, einen "überforderten" Rechner für einen Dienst vorzusehen, der dann absehbar nicht oder nicht ausreichend performant erbracht werden kann.

Die Berechnungsvorschriften für die Strafpunkte s führen aufgrund der Berücksichtigung verschiedener Parameter der Rechner, der Dienste und der Konfigurationshistorie in diesen Berechnungsvorschriften zu einer Abbildung verschiedenster Eigenschaften und Anforderungen, die an den Rechnerverbund gestellt werden, auf die eine skalare Größe der Bewertungszahlen P. Diese sind untereinander mit Hilfe einer einfachen Vergleichsrelation (größer / kleiner) vergleichbar, wodurch konkurrierende Anforderungen unterschiedlicher Dienste auf einheitliche Art betrachtet werden können. Das Verhalten des automatischen Konfigurationsverfahrens wird so vorhersehbarer und die Gefahr eines unerwünschten Regelverhaltens, das zum Beispiel mit Oszillationen einhergeht, wird verringert. Das Verfahren ist damit besonders gut zur automatischen Durchführung geeignet.

Eine Dämpfung einer Oszillationsneigung des automatischen Konfigurationsverfahrens wird zudem durch den zweistufigen Entscheidungsprozess erreicht, indem zunächst aus der Menge der möglichen Konfigurationen die am besten geeignete herausgesucht wird (ein relatives Kriterium), diese jedoch nur dann eingenommen wird, wenn sie keine zu große Bewertungszahl aufweist (ein absolutes Kriterium).

In Rechnerverbünden mit einer großen Anzahl von Rechnern R und vielen bereitzustellenden Diensten D kann die Menge der möglichen Konfigurationen {Kx} insbesondere bei der Berücksichtigung mehrerer Anforderungsanfragen Rq jedoch extrem groß werden. In einem solchen Fall kann in einer alternativen Ausgestaltung des Verfahrens davon abgesehen werden, die tatsächlich günstigste Konfiguration Kmin aus der Menge der möglichen Konfigurationen {Kx} zu bestimmen, falls eine günstige Konfiguration K gefunden wird, die ein vorgegebenes Kriterium erfüllt. Beispielsweise kann ein Schwellenwert Pok für die Bewertungszahlen Px vorgegeben sein, der vorzugsweise kleiner als der tolerierbare Bewertungszahlenwert Ptol ist. Wird eine Konfiguration Kx aufgefunden, deren Bewertungszahl Px diesen Schwellenwert Pok unterschreitet, kann davon ausgegangen werden, dass die aufgefundene Konfiguration Kx so günstig ist, dass eine weitere Suche nach einer eventuell in der Menge der möglichen Konfigurationen befindliche noch günstigere Konfiguration als nicht notwendig erscheint. Folglich kann die Bewertung weiterer Konfigurationen unterbleiben und die entsprechende Konfiguration, zu der die unter dem Schwellenwert liegende Bewertungszahl berechnet wurde, eingenommen werden.

Ein weiterer Weg zur Beschleunigung der Bestimmung einer Bewertungszahl liegt darin, während der Addition von Teilbewertungspunkten bei der Bestimmung einer Bewertungszahl diese Bestimmung dann abzubrechen, wenn die Summe der Teilbewertungszahlen bereits größer ist als die bislang kleinste aufgefundene Bewertungszahl.

Weitere Ausgestaltungen des anmeldungsgemäßen Verfahrens betreffen Fälle, in denen kein eindeutiges Minimum - oder allgemeiner Extremum - der Bewertungszahlen Px in der Menge der möglichen Konfigurationen Kx gefunden werden kann. Beispielsweise ist denkbar, dass verschiedene Konfigurationen Kx zum selben minimalen Wert der Bewertungszahl Px führen. In einem solchen Fall kann der Dienstrelevanzwert DR des Dienstes D, der durch eine der Konfigurationen Kx begünstigt würde, als Entscheidungskriterium herangezogen werden. Eine andere Möglichkeit besteht darin, alle Anfragen eines Agenten A, der den Dienst D mit dem geringsten Dienstrelevanzwert DR vertritt, von der Menge der möglichen Konfigurationen {Kx} auszuschließen, falls kein eindeutiges Minimum der Bewertungszahlen Px gefunden werden kann. Gegebenenfalls kann dieses sukzessive mit noch verbleibenden Agenten beziehungsweise Diensten durchgeführt werden. Bei dem in Figur 2 gezeigten Ausführungsbeispiel kann dieses erreicht werden, indem in Schritt S6 nicht nur dann zum Schritt S8 verzweigt wird, wenn die gefundene minimale Bewertungszahl Pmin nicht kleiner als der tolerierbare Bewertungszahlenwert Ptol ist, sondern auch wenn Pmin kein eindeutiges Minimum nur einer Konfiguration Kx ist.

Weitere Ausgestaltungen des Konfigurationsverfahrens betreffen die Aufgabenverteilung zwischen den Agenten A und der zentralen Steuereinheit Z. Bevorzugt ist vorgesehen, dass die Agenten A selbsttätig die ihrer Rechnergruppe G zugeteilten Rechner R und die darauf ablaufenden Dienstinstanzen DI überwachen und auch eine in diesem Rahmen mögliche Fehlerkorrektur, zum Beispiel das Beenden und Neustarten einer Dienstinstanz DI, vornehmen. Für manche zu erbringende Dienste D wird vom Hersteller der Dienstinstanzen DI bereits eine Verwaltungseinheit zur Verfügung gestellt, die dem anmeldungsgemäßen Agenten vergleichbare Aufgaben ausführen kann. Für die anmeldungsgemäßen Agenten relevante Funktionen, die eine solche bereits verfügbare Verwaltungseinheit nicht leisten kann, können dann von der zentralen Steuereinheit Z übernommen werden. Weiterhin ist es möglich, dass eine bereits verfügbare Verwaltungseinheit zwar die notwendige Funktionalität aufweist, Anforderungsanfragen Rq jedoch nicht in geeigneter Form erstellen kann. Es ist beispielsweise denkbar, dass eine Verwaltungseinheit bereits dazu eingerichtet ist, bei ihr registrierte Dienstinstanzen DI bezüglich ihrer Leistungsfähigkeit zu überwachen und die Auslastung der Dienstinstanzen DI ausgeben können.

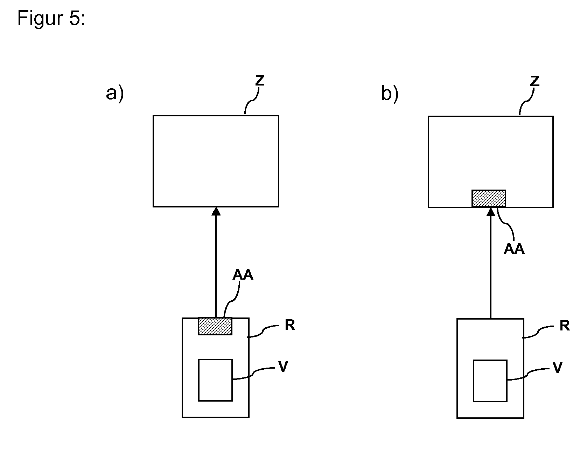

In den Figuren 5a und 5b sind jeweils Ausschnitte eines Rechnerverbunds gezeigt, in dem eine den Agenten ähnliche Verwaltungseinheit V mit einer Zentraleinheit verbunden ist. Es ist jeweils ein (Agenten-)Adapter AA vorgesehen, der die Ausgabe der Verwaltungseinheit V entgegennimmt, mit den vorgegebenen Kriterien für eine Auslastung vergleicht und gegebenenfalls eine Anforderungsanfrage Rq an die zentrale Steuereinheit Z stellt. Ein solcher Adapter AA dient also der Umsetzung oder Anpassung der von der Verwaltungseinheit V herausgegebenen Informationen in eine formatskonforme und von der zentralen Steuereinheit Z lesbare Anforderungsanfrage Rq. Der Adapter kann dabei auf dem einen Agenten A ausführenden Rechner R vorgesehen sein, wie in Figur 5a dargestellt, oder auch in der zentralen Steuereinheit Z angeordnet werden, wie in Figur 5b gezeigt.

Eine weitere Gruppe von vorteilhaften Ausgestaltungen des erfindungsgemäßen Verfahrens betrifft die Übergabe und Umsetzung der aufgefundenen günstigsten Konfiguration Kmin. Im Ausführungsbeispiel der Figur 1 ist es Aufgabe der zentralen Steuereinheit Z, die günstige und einzunehmende Konfiguration Kmin zu bestimmen und Aufgabe des Orchestrators O, durch entsprechende Strukturierungsanweisungen S die Umsetzung dieser Konfiguration Kmin zu veranlassen. Es ist dabei jedoch auch denkbar, die Funktion der zentralen Steuereinheit Z und des Orchestrators O zusammenzufassen und sowohl Auffinden als auch Umsetzen der Konfiguration von der zentralen Steuereinheit Z ausführen zu lassen. Darüber hinaus ist denkbar, einen bekannten Orchestrator, der prinzipiell geeignet ist, die Rechner eines Rechnerverbunds zu konfigurieren und so den Rechnerverbund umzustrukturieren, zu verwenden und durch einen (Orchestrator-)Adapter zu ergänzen, dass er eine Konfiguration Kmin in dem von der zentralen Steuereinheit Z ausgegebenen Format verarbeiten kann.

Im anmeldungsgemäßen Verfahren teilt sich die Verwaltung der Rechner auf in die vom Agenten A vorgenommene Verwaltung innerhalb der Rechnergruppen G und die Verwaltung der Rechnergruppen G durch die zentrale Steuereinheit Z. Die relativ große Autonomie, die die Agenten A im Hinblick auf die Verwaltung der ihnen zugeteilten Rechner R haben, bedingt eine hohe Fehlertoleranz des Rechnerverbunds auch beim Ausfall der zentralen Steuereinheit Z. Von daher ist es für viele Anwendungsfälle nicht erforderlich, die zentrale Steuereinheit Z durch Redundanz hoch verfügbar auszuführen. Auch ohne reduntante Auslegung der zentralen Steuereinheit Z kann eine hohe Verfügbarkeit des Rechnerverbunds bereits dadurch erreicht werden, dass durch geeignete Mittel die korrekte Funktion der Steuereinheit Z überwacht wird und diese gegebenenfalls bei einem Ausfall neu gestartet wird.

Die relativ große Autonomie, die die Agenten A im Hinblick auf die Verwaltung der ihnen zugeteilten Rechner R haben, erlaubt zudem den Anschluss vieler Agenten A an die Steuereinheit Z, ohne diese zu sehr zu belasten.

### Bezugszeichenliste

- R1 bis R7: Rechner
- G1 bis G3: Rechnergruppe
- G0: weitere Rechnergruppe
- A1 bis A3: Agent
- D1 bis D3: Dienst
- DI: Dienstinstanz
- DR: Dienstrelevanzwert
- LK: Leistungsklasse
- Rq: Anforderungsanfrage
- Z: zentrale Steuereinheit
- O: Orchestrator
- S: Strukturierungsanweisung
- DS: Datenstruktur
- K: Konfiguration
- Kmin: ausgezeichnete Konfiguration
- P: Bewertungszahl
- Pmin: ausgezeichnete Bewertungszahl
- Ptol: tolerierbare Bewertungszahl
- Pok: Schwellenwert
- p(R,G): Teilbewertungszahl
- s: Strafpunkt
- w: Strafwert
- V: Verwaltungseinheit
- AA: Agentenadapter

## Patentansprüche

1. Verfahren zur Konfiguration eines Rechnerverbundes mit einer Mehrzahl von Rechnern (R) mit den folgenden Schritten:
- Vorgeben mindestens einer Rechnergruppen (G) zur Bereitstellung jeweils eines Dienstes (D), wobei jeder Rechnergruppe (G) anfangs jeweils einer der Rechner (R) zugewiesen wird, auf dem ein dem jeweiligen Dienst (D) und der entsprechenden Rechnergruppe (G) zugeordneter Agent (A) ausgeführt wird;
- Vorgeben einer weiteren Rechnergruppe (G0), der alle Rechner (R) zugeordnet sind, die keiner Rechnergruppe (G) zugeordnet sind;
- Senden einer Anforderungsanfrage (Rq) mindestens eines der Agenten (A) an eine zentrale Steuereinheit (Z), wobei die Anforderungsanfrage (Rq) die Bereitstellung mindestens eines weiteren Rechners (R) zu der Rechnergruppe (G), der der anfordernde Agent (A) zugewiesen ist, betrifft;
- Bestimmen einer Mehrzahl von möglichen Konfigurationen (K) des Rechnerverbunds, die der Anforderungsanfrage (Rq) genügen, durch die zentrale Steuereinheit (Z), wobei eine mögliche Konfiguration (K) eine eindeutige Zuordnung eines jeden Rechners (R) zu entweder genau einer der Rechnergruppen (G) oder zu der weiteren Rechnergruppe (G0) darstellt;
- Ermitteln je einer Bewertungszahl (P) zu jeweils einer Konfiguration (K) für zumindest einen Teil der möglichen Konfigurationen (K);
- Bestimmen einer ausgezeichneten Bewertungszahl (Pmin) aus der Menge der ermittelten Bewertungszahlen (P) und Ermitteln einer zugehörigen ausgezeichneten Konfiguration (Kmin);
- Konfigurieren des Rechnerverbunds in der ermittelten ausgezeichneten Konfiguration (Kmin).

2. Verfahren nach Anspruch 1, bei dem die Anforderungsanfrage (Rq) die Bereitstellung genau eines weiteren Rechners (R) betrifft.

3. Verfahren nach einem der Ansprüche 1 oder 2, bei dem die ausgezeichnete Bewertungszahl (Pmin) ein Extremwert aus der Menge der ermittelten Bewertungszahlen (P) ist.

4. Verfahren nach einem der Ansprüche 1 oder 2, bei dem die ausgezeichnete Bewertungszahl (Pmin) kleiner als ein vorgegebener Schwellenwert (Pok) ist.

5. Verfahren nach einem der Ansprüche 1 bis 4, bei dem ein Toleranzwert (Ptol) vorgegeben ist und bei dem im letzten Schritt des Verfahrens nach Anspruch 1 der Rechnerverbund nur dann in der ermittelten Konfiguration (Kmin) konfiguriert wird, wenn die zugehörige Bewertungszahl (Pmin) kleiner ist als der Toleranzwert (Ptol).

6. Verfahren nach Anspruch 4 und 5, bei dem der Schwellenwert (Pok) kleiner ist als der Toleranzwert (Ptol).

7. Verfahren nach einem der Ansprüche 1 bis 6, bei dem zu den Diensten (D) Dienstrelevanzwerte (DR) vorgegeben sind und bei dem die Bewertungszahl (P) zu einer möglichen Konfiguration (K) abhängig von den Dienstrelevanzwerten (DR) bestimmt wird.

8. Verfahren nach einem der Ansprüche 1 bis 7, bei dem zu den Rechnern (R) und den Diensten (D) Leistungsklassen (LK) vorgegeben sind, die die Eignung eines Rechners (R) zur Erbringung eines Dienstes (D) kennzeichnen, und bei dem die Bewertungszahl (P) zu einer möglichen Konfiguration (K) abhängig von den Leistungsklassen (LK), die den Rechnern (R) und den Diensten (D), die von den Rechnern (R) gemäß der Zuweisung zu Rechnergruppen (G) zu erbringen sind, zugeordnet ist, bestimmt wird.

9. Verfahren nach einem der Ansprüche 1 bis 8, bei dem die Bewertungszahl (P) zu einer möglichen Konfiguration (K) abhängig von einem Zeitraum bestimmt wird, der seit der Umkonfiguration eines Rechners (R), der in der möglichen Konfiguration (K) zur Erbringung eines Dienstes (D) vorgesehenen ist, vergangen ist.

10. Verfahren nach einem der Ansprüche 1 bis 9, bei dem der Agent (A) dazu eingerichtet sind, die Dienstinstanzen (DI), die die Dienste (D) innerhalb der Rechnergruppe (G) erbringen, auf den der Rechnergruppe (G) zugewiesenen Rechnern (R) zu überwachen.

11. Verfahren nach Anspruch 10, bei dem der Agent (A) bei der Überwachung feststellt, mit welcher Güte einer der Dienste (D) erbracht wird und die Anforderungsanfrage (Rq) an die zentrale Steuereinrichtung (Z) dann sendet, wenn die Güte, mit der der Dienst (D) von den Dienstinstanzen (DI) erbracht wird, vorgegebenen Kriterien nicht genügt.

12. Verfahren nach einem der Ansprüche 1 bis 11, bei dem die zentrale Steuereinrichtung (Z) dazu eingerichtet ist, innerhalb eines vorgegeben Zeitraums eingehende Anforderungsanfragen (Rq) entgegenzunehmen und zu speichern, wobei alle entgegengenommenen und gespeicherten Anforderungsanfragen (Rq) bei der Bestimmung der Mehrzahl der möglichen Konfigurationen (K) des Rechnerverbunds berücksichtigt werden.

13. Verfahren nach Anspruch 12, bei dem jede der Mehrzahl der möglichen Konfigurationen (K) zumindest einer der entgegengenommenen und gespeicherten Anforderungsanfragen (Rq) genügt.

14. Rechnerverbund zum Bereitstellen von Diensten (D), aufweisend eine Mehrzahl von Rechnern (R), **dadurch gekennzeichnet, dass** eine zentrale Steuereinheit (Z) vorgesehen ist, die dazu eingerichtet ist, ein Verfahren nach einem der Ansprüche 1 bis 13 auszuführen.

15. Computerprogramm, das in einem als zentrale Steuereinheit (Z) eines Rechnerverbundes fungierenden Computer abläuft und dabei ein Verfahren zur automatischen Konfiguration des Rechnerverbundes gemäß einem der Ansprüche 1 bis 13 durchführt.
